Europäisches Patentamt

European Patent Office

Office européen des brevets

(19)

(11) EP 0 837 390 A1

(12) EUROPEAN PATENT APPLICATION

(43) Date of publication:
22.04.1998 Bulletin 1998/17

(51) Int. Cl.⁶: G06F 7/52

(21) Application number: 97118062.5

(22) Date of filing: 17.10.1997

(84) Designated Contracting States:
AT BE CH DE DK ES FI FR GB GR IE IT LI LU MC
NL PT SE
Designated Extension States:
AL LT LV RO SI

(30) Priority: 18.10.1996 US 28648 P

(71) Applicant:
TEXAS INSTRUMENTS INCORPORATED
Dallas Texas 75265 (US)

(72) Inventors:
• Sarma, Debjit Das
Dallas, Dallas County, TX 75206 (US)
• Dao, Tuan Q.
Richardson, Dallas County, TX 75081 (US)
• Hayashi, Naoki
Dallas, Dallas County, Texas 75243 (US)

(74) Representative:
Schwepfinger, Karl-Heinz, Dipl.-Ing.
Prinz & Partner,
Manzingerweg 7
81241 München (DE)

(54) **Improvements in or relating to microprocessor integrated circuits**

(57) A microprocessor and system including a floating-point unit (FPU) (31) for performing floating-point division are disclosed. According to the preferred embodiment of the invention, FPU (31) includes a divisor reciprocal ROM (55a) and circuitry (61) for rapidly generating the logical complement of a divisor reciprocal estimate. The divisor reciprocal estimate is multiplied, by way of a multiplier array in FPU (31), with the dividend operand to generate an initial quotient estimate. The multiplier array is constructed to have additional bits beyond those required to express the result, to provide adequate accuracy in the results. Successive iterations are performed by FPU (31) to refine the estimate of the quotient by using a reciprocal adjustment factor produced by the logical complement of a divisor adjustment factor. Significant performance improvement is obtained by using the logical complement of the divisor adjustment factor, as compared with full precision subtraction involved in the two's complement of the factor as in conventional circuitry and methods.

FIG. 7

## Description

### BACKGROUND OF THE INVENTION

This invention is in the field of microprocessor integrated circuits, and is more specifically directed to arithmetic units in, and arithmetic methods performed by, such circuits.

Many modern microprocessors are capable of performing arithmetic operations upon numbers represented in floating-point fashion, where each number is represented by a mantissa, an exponent, and a sign bit. This floating-point capability is now typically implemented by way of on-chip floating-point execution units in microprocessors, for example those of the well-known x86 architecture. As such, integer arithmetic operations are performed by integer arithmetic logic units, while the floating-point unit is dedicated to performing arithmetic operations upon operands that are in floating-point form, such as in formats specified by the well-known IEEE 754 floating-point standard. This arrangement provides for improved performance by the microprocessor, as the floating-point unit is not occupied by many of the integer operations in a program.

As is well known in the art, conventional floating-point units are able to rapidly addING and multiply floating-point operands, using adders, multiplier arrays, and shifters (for exponent handling). Subtraction and division operations are typically also performed using the adders and multipliers in the floating-point unit. A fundamental technique for division of binary operands, such as floating-point mantissas, is the well-known iterative shift-and-subtract algorithm, which is functionally equivalent to long division. For example, the PENTIUM microprocessor, available from the Intel Corporation, uses a radix-4 version of the shift-and-subtract algorithm for mantissa division. While conventional shift-and-subtract algorithms are relatively simple and accurate, they are also typically quite time-consuming. For example, it has been observed that the floating-point unit in the PENTIUM microprocessor, using radix-4 long division, typically requires thirty-nine machine cycles to divide double-extended-precision floating-point mantissas.

Approximation algorithms are another class of binary division algorithms useful in connection with microprocessor floating-point units. Algorithms of this type may be implemented by multiply and add operations, allowing for rapid execution in conventional microprocessors. Approximation algorithms typically begin with an estimate of the quotient, followed by iterative operations until the quotient estimate reaches the desired accuracy. Well-known multiplier-based approximation algorithms useful in the division of binary operands include the Newton-Raphson method, convergence division, and prescaled and short reciprocal division methods. These conventional approximation algorithms are typically significantly faster than the traditional shift-and-subtract algorithm, when implemented on conventional microprocessors. Examples of these conventional algorithms are described in U.S. Patent No. 3,828,175, U.S. Patent No. 3,591,787, and U.S. Patent No. 4,707,798.

U.S. Patent No. 4,878,190, assigned to Texas Instruments Incorporated, describes a floating-point unit that uses convergence division to divide binary operands. As described therein and as well-known in the art (i.e., as the "Goldschmitt" algorithm), convergence division is an iterative division algorithm in which the dividend is initially multiplied by an estimate of the reciprocal of the divisor, to arrive at an estimated quotient. The accuracy of the estimated quotient is improved with each iteration, by the application of an adjustment factor to the previous quotient estimate; the adjustment factor more nearly approaches unity with each iteration.

By way of further background, the convergence division algorithm will now be described, as used in the division of a binary dividend N by a binary divisor D to arrive at a quotient Q, where each of dividend N and divisor D are floating-point mantissas in normalized form (i.e., $2 > N, D \geq 1$). In convergence division, an initial value $R_0$ of the reciprocal of divisor D is selected, typically from a look-up table as described in the above-incorporated U.S. Patent No. 4,878,190. After such initialization, a first iterated divisor adjustment factor $D_0$ is calculated by:

$$D_0 = D \times R_0$$

and a first iterated quotient $Q_0$ is produced by:

$$Q_0 = N \times R_0$$

Each iteration updates the reciprocal adjustment factor $R_i$, divisor adjustment factor $D_i$, and quotient $Q_i$, based upon the results of the previous iteration. The updated reciprocal adjustment factor $R_{i+1}$ is generated by:

$$R_{i+1} = 2 - D_i$$

As divisor adjustment factor $D_i$ tends toward unity (as it corresponds to the divisor D multiplied by an improving estimate of its reciprocal), reciprocal adjustment factor $R_i$ also tends toward unity, but from the opposite direction. This new value of reciprocal adjustment factor $R_{i+1}$ is then used to produce a new divisor adjustment factor estimate $D_{i+1}$ by:

$$D_{i+1} = D_i \times R_{i+1}$$

and to produce a new quotient estimate $Q_{i+1}$ based upon the previous quotient estimate $Q_i$ by:

$$Q_{i+1} = Q_i \times R_{i+1}$$

The iterations are repeated according to the desired level of accuracy, with the final estimated quotient $Q_{last}$ being rounded according to a "sticky" bit based upon the zero, positive, or negative status of a remainder RM calculated using the original dividend N and divisor D by:

$$RM = N - (Q_{last} \times D)$$

The number of iterations required for a desired level of accuracy of the quotient depends upon the accuracy of the initial reciprocal $R_0$. As noted above, the initial reciprocal $R_0$ is conventionally obtained from a look-up table, in which case the initial reciprocal $R_0$ is a k-bit binary number and thus has a maximum relative error $\varepsilon = 2^{-k}$. For the initial iteration of the convergence algorithm:

$$R_0 = \frac{1}{D}(1 + \varepsilon)$$

$$D_0 = 1 + \varepsilon$$

$$Q_0 = \frac{N}{D}(1 + \varepsilon)$$

The first updated reciprocal adjustment factor $R_1$ is, as noted above, determined by subtracting $D_0$ from 2, in which case $R_1 = 1 - \varepsilon$. Accordingly, assuming infinite precision of the operands and following the convergence algorithm described above:

$$D_1 = 1 - \varepsilon^2$$

$$Q_i = \frac{N}{D}(1 - \varepsilon^2)$$

The second iteration similarly provides:

$$R_2 = 1 + \varepsilon^2$$

$$D_2 = 1 - \varepsilon^4$$

$$Q_2 = \frac{N}{D}(1 - \varepsilon^4)$$

and, generally, for iteration i:

$$R_i = 1 + \varepsilon^{2^{(i+1)}}$$

$$D_i = 1 - \varepsilon^{2^i}$$

$$Q_i = \frac{N}{D}(1 - \varepsilon^{2^i})$$

Thus, as $D_i$ approaches unity, estimated quotient $Q_i$ approaches the true quotient with an accuracy that improves quadratically with the number of iterations performed.

In the case where a floating-point unit is intended to yield a mantissa quotient in IEEE double extended precision format, and thus of sixty-four bits in length, a five-bit initial reciprocal estimate for $R_0$ will yield an esti-

mated quotient Q of sixty-four bit accuracy with four iterations, assuming infinite precision for the intermediate results and operands. Of course, digital circuitry is incapable of infinite precision arithmetic, causing additional roundoff errors. As a result, additional bits are generally provided in conventional digital circuits to store intermediate results; these additional bits must be taken into account in determining the number of bits with which the initial reciprocal is estimated, and also the number of iterations necessary for the convergence algorithm to return the desired result.

The number of machine cycles required by a conventional floating-point unit or other circuitry for executing a convergence division depends, of course, upon the number of iterations required to derive the quotient of sufficient accuracy, and also upon the number of machine cycles required to execute each iteration. As noted in the above description of the convergence division technique, each iteration generates a new estimate of reciprocal adjustment factor $R_{i+1}$ by calculating:

$$R_{i+1} = 2 - D_i$$

In effect, the updated reciprocal adjustment factor $R_{i+1}$ is the two's complement of the previous divisor adjustment factor $D_i$. As is well known in the art, however, the generation of a two's complement of a binary operand using conventional adder circuitry is relatively inefficient, as this operation involves a full subtraction, or a logical complement operation followed by a full addition. In typical modern microprocessors, this combination of operations to arrive at a two's complement value can itself require three machine cycles.

BRIEF SUMMARY OF THE INVENTION

It is therefore an object of the present invention to provide an arithmetic unit in which divisions may be efficiently performed.

It is a further object of the present invention to provide a method of operating a floating-point unit in a microprocessor to efficiently perform floating-point divide operations.

It is a further object of the present invention to provide such a unit and method in which the speed with which convergence division may be performed is increased.

It is a further object of the present invention to provide such a unit and method in which no additional bits are necessary, beyond those already present in the multiplier circuitry and internal registers, to obtain the improved efficiency.

The present invention may be implemented into arithmetic circuitry, such as the floating-point unit of a microprocessor, and a method of operating the same, in which the division of binary operands is performed by way of iterated convergence division. The reciprocal adjustment factor, by which each estimate of the quotient is multiplied to produce a closer estimate of the quotient, is adjusted in each iteration by using the logical complement of a divisor adjustment factor, for example with inverting circuitry within the unit. The quotient estimate still converges on the true quotient almost quadratically with the number of iterations, and the necessity for calculating the two's complement of the reciprocal adjustment factor is eliminated. According to another aspect of the present invention, the method for operating the arithmetic circuitry is implemented into a microcode sequence.

BRIEF DESCRIPTION OF THE SEVERAL VIEWS OF THE DRAWING

The present invention will now be further described by way of example, with reference to the accompanying drawings in which:

Figure 1 is an electrical diagram, in block form, of a microprocessor and system constructed according to the preferred embodiment of the invention;
Figure 2 is an electrical diagram, in block form, of a floating-point unit in the microprocessor of Figure 1;
Figure 3 is an electrical diagram, in block form, of the scheduling and operand circuitry in the floating-point unit of Figure 2 according to the preferred embodiment of the invention;
Figure 4 is an electrical diagram, in block form, of the floating-point ROM and divisor reciprocal ROM in the floating-point unit of Figure 2 according to the preferred embodiment of the invention;
Figure 5 is an electrical diagram, in block form, of the execution stages in the floating-point unit of Figure 2 according to the preferred embodiment of the invention;
Figure 6 is an electrical diagram, in block form, of the multiplier array in the floating-point unit of Figure 2 according to the preferred embodiment of the invention;
Figure 7 is a flow chart illustrating the operation of the floating-point unit of Figure 2 in performing division according to the preferred embodiment of the invention;
Figure 8 is a flow chart illustrating the operation of the floating-point unit of Figure 7 in rounding the result of the division of Figure 7 according to the preferred embodiment of the invention;

DETAILED DESCRIPTION OF THE INVENTION

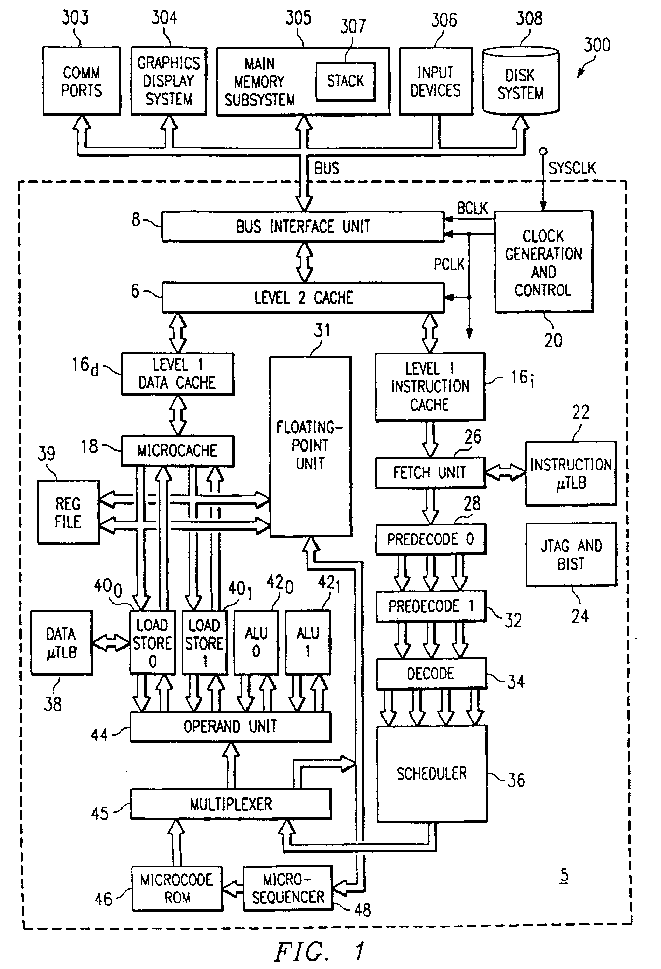

Referring now to Figure 1, an exemplary data processing system 300, including an exemplary superscalar pipelined microprocessor 5 within which the preferred embodiment of the invention is implemented, will be described. It is to be understood that the architecture of system 300 and of microprocessor 5 is described herein by way of example only, as it is contemplated that the present invention may be utilized in microprocessors of various architectures. It is therefore contemplated that one of ordinary skill in the art, having reference to this specification, will be readily able to implement the present invention in such other microprocessor architectures. It is further contemplated that the present invention may be realized in single-chip microprocessors and microcomputers or in multiple-chip implementations, with the manufacture of such integrated circuits accomplished according to silicon substrate, silicon-on-insulator, gallium arsenide, and other manufacturing technologies, and using MOS, CMOS, bipolar, BiCMOS, or other device implementations.

Microprocessor 5, as shown in Figure 1, is connected to other system devices by way of external bus BUS. While external bus BUS, in this example, is shown as a single bus, it is of course contemplated that external bus BUS may represent multiple buses having different speeds and protocols, as is known in conventional computers utilizing the PCI local bus architecture. System 300 contains such conventional subsystems as communication ports 303 (including modem ports and modems, network interfaces, and the like), graphics display system 304 (including video memory, video processors, a graphics monitor), main memory system 305 which is typically implemented by way of dynamic random access memory (DRAM) and which may include memory stack 307, input devices 306 (including keyboard, a pointing device, and the interface circuitry therefor), and disk system 308 (which may include hard disk drives, floppy disk drives, and CD-ROM drives). It is therefore contemplated that system 300 of Figure 1 corresponds to a conventional desktop computer or workstation, as are now common in the art. Of course, other system implementations of microprocessor 5 can also benefit from the present invention, as will be recognized by those of ordinary skill in the art.

Microprocessor 5 includes bus interface unit (BIU) 8 connected to external bus BUS, which controls and effects communication between microprocessor 5 and the other elements in a system 300. BIU 8 includes the appropriate control and clock circuitry to perform this function, including write buffers for increasing the speed of operation, and including timing circuitry so as to synchronize the results of internal microprocessor operation with bus BUS timing constraints. Microprocessor 5 also includes clock generation and control circuitry 20 which generates clock phases based upon system clock SYSCLK; in this example, clock generation and control circuitry 20 generates bus clock BCLK and core clock PCLK from system clock SYSCLK.

As is evident in Figure 1, microprocessor 5 has three levels of internal cache memory, with the highest of these as level 2 cache 6, which is connected to BIU 8 by way of an internal bus. In this example, level 2 cache 6 is a unified cache, and is configured to receive all cacheable data and cacheable instructions from bus BUS via BIU 8, such that much of the bus traffic presented by microprocessor 5 is accomplished via level 2 cache 6. Of course, microprocessor 5 may also effect bus traffic around cache 6, by treating certain bus reads and writes as "not cacheable". Level 2 cache 6, as shown in Figure 1, is connected to two level 1 caches 16; level 1 data cache $16_d$ is dedicated to data, while level 1 instruction cache $16_i$ is dedicated to instructions. Microcache 18 is a fully dual-ported level 0 data cache, in this example.

As shown in Figure 1, microprocessor 5 is of the superscalar type, and thus includes multiple execution units. These execution units include two ALUs $42_0$, $42_1$ for processing conditional branch, integer, and logical operations, floating-point unit (FPU) 31, two load-store units $40_0$, $40_1$, and microsequencer 48. The two load-store units 40 utilize the two ports to microcache 18, for true parallel access thereto, and also perform load and store operations to registers in register file 39. Data microtranslation lookaside buffer ($\mu$TLB) 38 is provided to translate logical data addresses into physical addresses, in the conventional manner.

These multiple execution units are controlled by way of multiple pipelines of seven stages each, with write-back. The pipeline stages are as follows:

F Fetch: This stage generates the instruction address and reads the instruction from the instruction cache or memory

PD0 Predecode stage 0: This stage determines the length and starting position of up to three fetched x86-type instructions

PD1 Predecode stage 1: This stage extracts the x86 instruction bytes and recodes them into fixed length format for decode

DC Decode: This stage translates the x86 instructions into atomic operations (AOps)

SC Schedule: This stage assigns up to four AOps to the appropriate execution units (including FPU 31)

OP Operand: This stage retrieves the register operands indicated by the Aops

EX Execute: This stage runs the execution units according to the AOps and the retrieved operands

WB Write-back: This stage stores the results of the execution in registers or in memory

This pipeline, referred to hereinbelow as the "integer pipeline", operates in combination with the floating-point pipeline of FPU 31 according to the preferred embodiment of the present invention, as will be described in further detail hereinbelow.

Referring back to Figure 1, the pipeline stages noted above are performed by various functional blocks within microprocessor 5. Fetch unit 26 generates instruction addresses from the instruction pointer by way of instruction micro-translation lookaside buffer ($\mu$TLB) 22, for application to level 1 instruction cache $16_i$. Instruction cache $16_i$ produces a stream of instruction data to fetch unit 26, which in turn provides the instruction code to predecode 0 stage 28 and predecode 1 stage 32 in the desired sequence. These two stages operate as separate pipeline stages, and together operate to locate up to three x86 instructions and apply the same to decoder 34. Predecode 0 stage 28 determines the size and position of as many as three variable-length x86 instructions, while predecode 1 stage 32 recodes the multi-byte instructions into a fixed-length format to facilitate decoding. Decode unit 34, in this example, contains four instruction decoders, each capable of receiving a fixed length x86 instruction from predecode 1 stage 32 and producing from one to three atomic operations (AOps), which are substantially equivalent to RISC instructions. Scheduler 36 reads up to four AOps from the decode queue at the output of decode unit 34, and assigns these AOps to the appropriate execution units. Operand unit 44 receives an input from scheduler 36 and also from microcode ROM 46, via multiplexer 45, and fetches register operands for use in the execution of the instructions. In addition, according to this example, operand unit 44 also performs operand forwarding to send results to registers that are ready to be stored, and also performs address generation for AOps of the load and store type.

Microsequencer 48 and microcode ROM 46 control ALUs 42 and load/store units 40 in the execution of microcode entry AOps, which are generally the last AOps to execute in a cycle. In this example, microsequencer 48 sequences through microinstructions stored in microcode ROM 46, to effect control responsive to microcoded microinstructions such as complex or rarely-used x86 instructions, x86 instructions that modify segment or control registers, handling of exceptions and interrupts, and multi-cycle instructions (such as REP instructions, and instructions that PUSH and POP all registers). Microprocessor 5 also includes circuitry 24 for controlling the operation of JTAG scan testing, and of certain built-in self-test (BIST) functions, ensuring the validity of the operation of microprocessor 5 upon completion of manufacturing, and upon resets and other events.

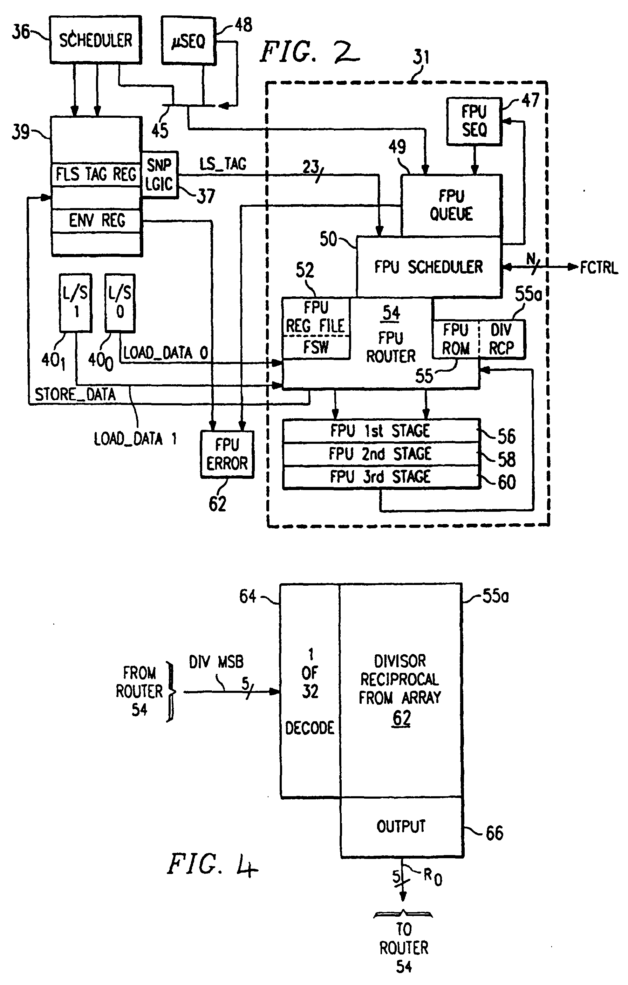

Referring now to Figure 2, the construction of FPU 31 according to this embodiment of the invention, and its interconnection with the other functional blocks of microprocessor 5, will now be described in detail. This construction of FPU 31 is presented by way of example only, as it is to be understood that the present invention will be beneficial in the implementation of floating-point units constructed according to other architectures and designs.

FPU 31 includes FPU queue stage 49, which is effectively an instruction buffer, between the integer portions of microprocessor 5 and the execution stages of FPU 31. FPU queue stage 49 receives FPU instructions from scheduler 36 or from integer microsequencer 48 (in the case of microcoded instructions), via multiplexer 45 that is under the control of microsequencer 48. FPU queue stage 49 also receives FPU instructions from FPU microsequencer 47, for the execution of microcoded FPU instructions.

FPU queue stage 49 is connected to FPU scheduler 50 which, in this example, performs the scheduling function for floating-point instructions separately from scheduler 36 in the integer portion of microprocessor 5. FPU scheduler 50 is logic that operates in similar fashion as scheduler 36, responsive to instructions forwarded thereto from FPU queue stage 47. Register file 39 includes at least one register FLS TAG, which stores the format of data operands that are to be used by FPU 31. Snoop logic 37 is associated with register file 39 to monitor the pipeline for load/store operations corresponding to floating-point instructions, for example as may be stored in register FLS TAG. Snoop logic 37 encodes certain information corresponding to floating-point load/store directives, and forwards this information to FPU scheduler 50 on bus LS_TAG. In response to the floating-point AOps and to the load/store directives, FPU scheduler 50 issues control signals within FPU 31 to execute the instructions communicated thereto.

In this example, FPU 31 includes its own register file 52. Registers included within FPU register file 52 include a floating-point status word (FSW), a floating-point control word (FCW), and an eight-register data stack (consistent with the x86 instruction set). The five floating-point environment registers, useful for interrupt handling, are included in register file 39 (shown in Figure 2 as ENV REG), as these registers are not used internally by FPU 31.

FPU router 54 operates in conjunction with FPU scheduler 50 to forward the desired operands to the execution stages of FPU 31. FPU router 54 receives floating point operands from multiple sources. Operands retrieved from memory are forwarded to FPU router 54 from load/store units $40_0$, $40_1$ (presenting data on buses LOAD_DATA0, LOAD_DATA1, respectively). FPU router 54 also receives floating-point operands from FPU register file 52, constant data ROM 55, and FPU 3rd execution stage 60 (which presents writeback data from the results of prior instructions). Constant data ROM 55 stores common floating-point constants (e.g., $\pi$, e, $\sqrt{2}$) that may be used in floating-point instruction execution, particularly in transcendental function evaluation. In addition, according to this embodiment of the invention, FPU ROM 55 includes divisor reciprocal portion 55a, which serves as a look-up table for estimating the reciprocal of the divisor in initiating convergence division of floating-point mantissas according to the preferred embodiment of the invention.

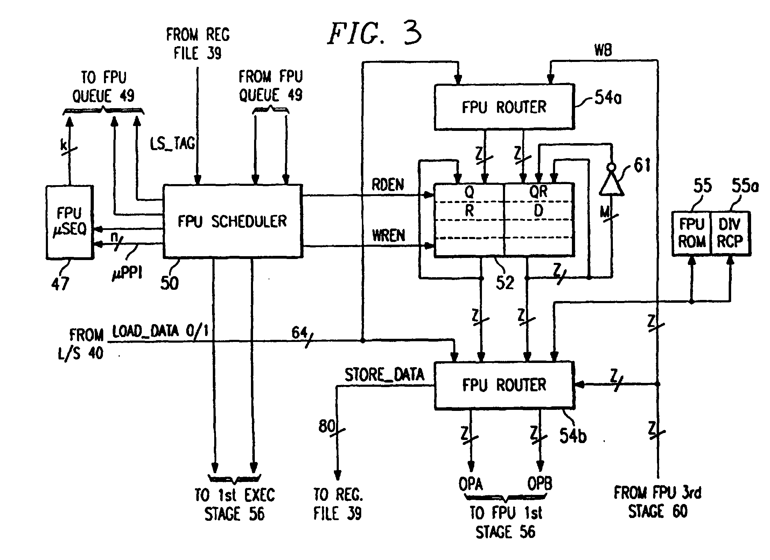

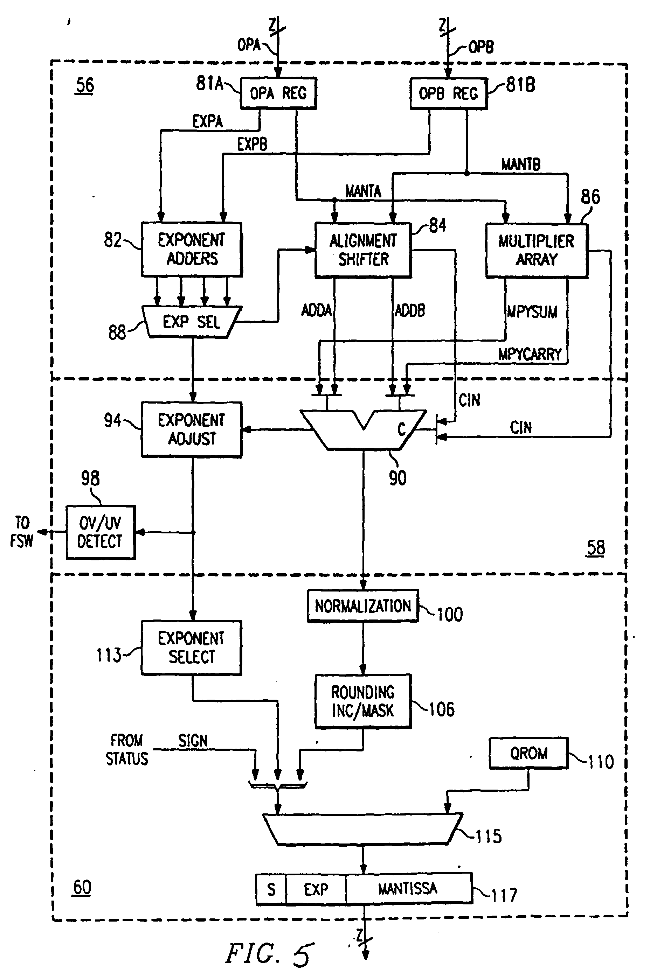

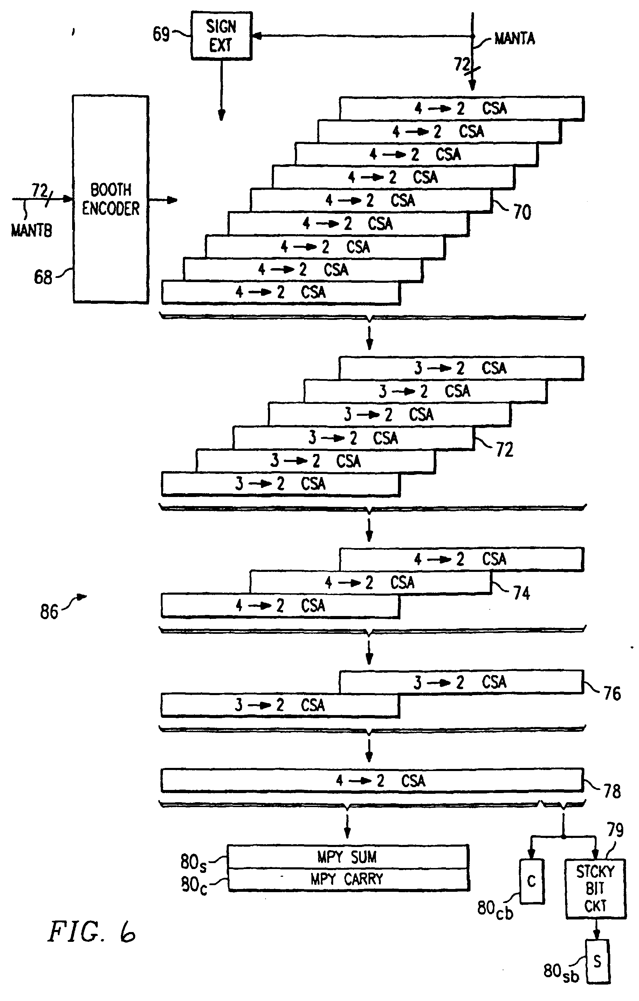

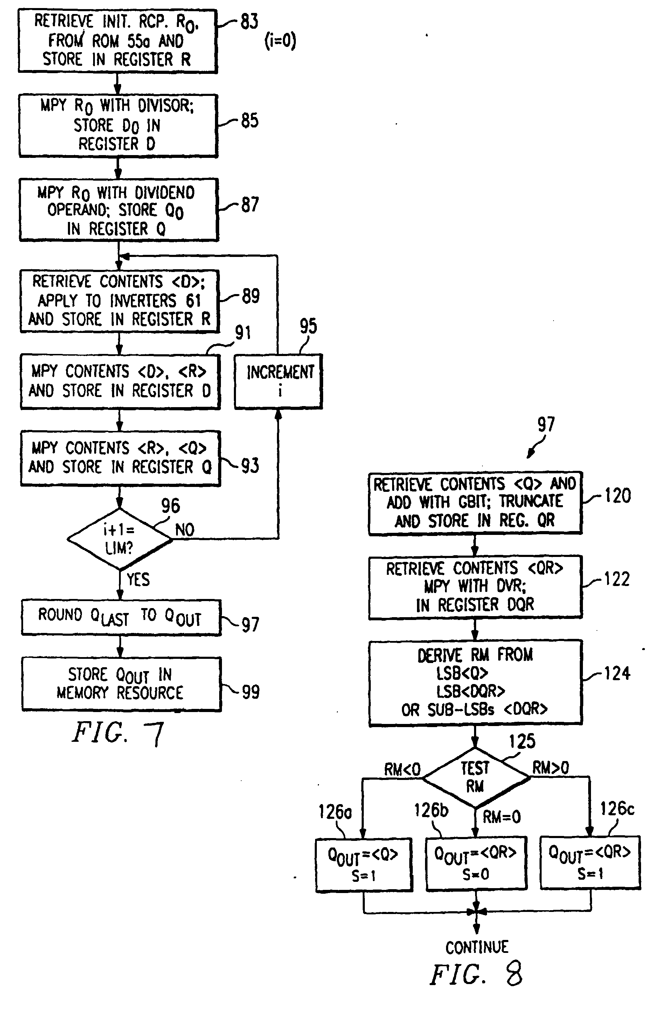

Referring now to Figure 3, the interconnection of FPU scheduler 50, FPU register file 52, FPU router 54, and FPU ROM 55 (including divisor reciprocal portion 55a) will now be described in detail. FPU scheduler 50 receives control signals and decoded instructions from FPU queue stage 49, based upon which scheduler 50 provides central execution control for each floating-point instruction to be executed by FPU 31. Maximum floating-point performance will be maintained by scheduling a new instruction in each cycle, such that the execution pipeline remains full. In order to approach this goal, resource dependencies and exception hazards are identified and handled by FPU scheduler 50.

FPU scheduler 50 also receives load/store directives on lines LS_TAG from snoop logic 37 of integer register file 39, as shown in Figure 2. Snoop logic 37 analyzes the many load/store atomic operations processed along the integer pipeline, identifies those that relate to floating-point operations, and encodes information regarding memory loads and stores for floating-point operands onto lines LS_TAG. The load/store directives on lines LS_TAG indicate the format of the floating-point operands that are to be communicated to FPU 31, and other information regarding a floating-point instruction. For example, lines LS_TAG will indicate whether the integer registers are the destination or source for a particular floating point instruction, whether the instruction is a single cycle instruction (push to top of stack, write to FPU register file 52, or store), the precision and type of the data (single or double precision, integer, floating-point, status or control word, etc.), and the portion of an extended precision floating point word to which the thirty-two bit operand corresponds. These parameters are used by FPU scheduler 50 to properly control the remainder of the circuitry in FPU 31, such as on lines RDEN (read enable) and WREN (write enable) sent to FPU register file 52, and on control signals issued to FPU execution stages 56, 58, 60.

According to this preferred embodiment of the invention, FPU scheduler 50 receives instruction control signals and directives from three sources, namely directives from load/store units 40 on lines LS_TAG, decoded control signals and opcodes from FPU queue stage 49, and address information from writeback bus WB generated by FPU $3^{rd}$ execution stage 60 in response to a single-pass instruction previously launched and executed. Based upon these inputs, FPU scheduler 50 checks for dependencies, or pipeline conflicts, among the resources to which the instructions, control signals and directives point. The source and destination resources to which the floating-point AOps already in the pipeline are recorded and analyzed by FPU scheduler 50 relative to each new instruction or directives in performing this function. FPU scheduler 50 also updates and maintains the machine status, for example by way of a floating-point status word FSW and a floating-point control word FCW. Status information, including identification of denormalized operands and other exceptions are communicated from the floating-point status word FSW for each floating-point result for storage in FPU error registers 62, via environment registers ENV REG in register file 39 and FPU queue stage 49.

Based on this information, scheduling logic in FPU scheduler 50 determines the operations to be launched for execution in the next cycle. In the event that no dependencies are detected and that the currently scheduled instruction includes a read or write to a register in the stack, FPU scheduler 50 issues commands to FPU register file 52 to validate previously issued enable signals according to the instruction being scheduled, and generates signals FPU router 54 to select the appropriate operands for forwarding to FPU $1^{st}$ execution stage 56 according to the instruction being launched. Single-pass instructions are initiated by FPU scheduler 50 by control signals to FPU $1^{st}$ execution stage 56.

Also depending upon the instruction, FPU scheduler 50 may initiate a floating-point microcoded sequence by issuing the responsible floating point instruction and a corresponding microcode entry address (on lines $\mu$FPI) to FPU microsequencer 47, which will in turn initiate the microcode routine from the entry address to generate the next sequence of instructions for execution. FPU microsequencer 47, according to this embodiment of the invention, issues and controls floating-point instructions that require multiple passes through FPU execution stages 56, 58, 60. An example of a multi-pass floating-point instruction handled by FPU microsequencer 47 is floating-point division according to the preferred embodiment of the invention, which will be described in detail hereinbelow. FPU microsequencer 47, as conventional in the art, includes a microcode ROM that stores executable instruction codes called by microcode entry addresses generated by scheduler 50. The architecture of FPU microsequencer 47, according to this preferred embodiment of the invention, is of the branch-always type, where the next microinstruction address is determined from one of four branch options in the current microinstruction. Upon entry into a microcode sequence, FPU microsequencer 47 presents the sequence of executable instruction codes to FPU queue stage 49, for scheduling by FPU scheduler 50.

In normal operation, where no conflicts or dependencies are detected, a new floating-point instruction will advance through FPU scheduler 50 on every cycle. In the event that a dependency is detected, FPU scheduler 50 will stall the pipeline. The instruction being scheduled at the time of a stall will not proceed, and will be held up until the dependency or exception clears. In the event of a conflict that causes the execution of an earlier instruction to not complete in normal fashion (e.g., prior to execution of an instruction upon a denormal operand, or execution resulting in not-a-number NaN), FPU scheduler 50 will issue an abort sequence, in which case the instructions currently in the floating-point pipeline will be flushed, and the floating-point sequence will be restarted.

Scheduler 50 in FPU 31 also handles instruction completion, including writeback and update of machine status. In the event of any exceptions resulting from the execution of a floating-point operation, such as NaN (not a number), overflow, underflow, and the like, scheduler 50 is also responsible for handling the exceptions and reporting the exceptions to the integer pipeline by way of floating-point status word FSW, as noted above. Scheduler 50 and router 54 also provide an interface with the integer logic, as is necessitated by the distribution of the scheduling function to FPU 31.

FPU router 54 may be considered in two portions 54a, 54b, as shown in Figure 4, with portion 54a routing the appropriate data to FPU register file 52, and with portion 54b routing the appropriate signals from FPU register file 52 and elsewhere to the execution stages as operands OPA, OPB and to register file 39 on lines STORE_DATA. Both of FPU router portions 54a, 54b are substantially an assembly of multiplexers that receive data from load/store units 40 on a sixty-four bit bus made up of lines LOAD_DATA0/1. FPU router portion 54a also receives an eighty-nine bit data word (referred to herein as the ZBUS, and labeled as such in Figure 7) on lines WB from FPU $3^{rd}$ execution stage 60. FPU router portion 54a thus presents the appropriate information from these two sources to FPU register file 52, also by way of an eighty-nine bit ZBUS. The ZBUS format includes additional bits of precision beyond those specified by the highest external precision supported by FPU 31, so that intermediate results prior to rounding may be accurately maintained.

As illustrated in Figure 3, register writeback paths are also provided in connection with FPU register file 52, such that the contents of registers in FPU register file 52 may be moved among the various temporary registers therein. According to the preferred embodiment of the invention, inverting circuitry 61 is also provided, by way of which the mantissa portion of a floating-point operand stored in one of the registers of FPU register file 52 may be logically complemented, bit by bit, and stored in FPU register file 52. This operation of inverting circuitry 61 is controlled by control signals from FPU scheduler 50, so that the logical complementing of an operand may be executed in a single machine cycle, microcoded, instruction. The logical complementing of the mantissa of a floating-point operand by inverting circuitry 61 will be used in convergence division according to the preferred embodiment of the invention, as will be described in further detail hereinbelow.

Lower FPU router portion 54b receives operands from FPU register file 52 (on Z buses), operands retrieved from memory by load/store units 40 on lines LOAD_DATA0/1, constants from FPU ROM 55 when called, and results on writeback bus WB from FPU $3^{rd}$ execution stage 60. FPU router portion 54b thus, under the control of FPU scheduler 50, presents the selected operands, in Z bus format, to FPU 1st execution stage 56 on operand buses OPA, OPB. As noted above, FPU register file 52 contains the eight-register data stack used by floating-point instructions in the conventional x86 instruction set, including registers that will be referred to hereinbelow as Q, R, QR, and D in the division method according to the preferred embodiment of the invention. FPU ROM 55 includes certain constants useful in the evaluation of floating-point functions, as noted above.

Figure 4 illustrates the construction of divisor reciprocal portion 55a of FPU ROM 55. Divisor reciprocal portion 55a includes divisor reciprocal ROM array 62 having a number of entries corresponding to a selected number of most significant bits of the reciprocal of the mantissa portion of the divisor in a division operation. The number of bits contained within array 62 for each entry (and, correspondingly, the number of entries) depends upon the desired accuracy of the initial reciprocal estimate, which in turn affects the number of iterations necessary for the desired accuracy of the division. In this exemplary implementation, array 62 has thirty-two entries. Accordingly, divisor reciprocal portion 55a has a one-of-thirty-two decoder 64 that receives the five MSBs of the divisor mantissa from router 54 on lines DIV MSB; decoder 64 thus selects the one of the thirty-two entries of array 62 corresponding to these bits. The contents of the selected entry are forwarded to output circuitry 66, which presents the initial divisor reciprocal estimate on lines $R_0$ to router 54, for use as one of the operands in the division operation described hereinbelow.

Referring back to Figure 2, FPU 1st, 2nd, and 3rd execution stages 56, 58, 60, respectively, each include conventional arithmetic logic units used in floating-point arithmetic, and each include a status pipeline, a datapath, and a control pipeline. The control pipeline communicates control information regarding the instruction type, rounding mode, precision, exception masks and format control signals, along with the current instruction and operands in the corresponding execution stage. Similarly, the status pipeline uses both the control signals and also the data related information from the data path to generate an instruction status that also travels along with the instruction and operands along the FPU execution pipeline. The data path, including both an exponent pipeline and a mantissa pipeline given the floating-point operation of FPU 31, includes the necessary hardware for performing the arithmetic operations corresponding to the instruction. The output of FPU 3rd stage 60 is forwarded back to FPU router 54 for handling, as described above relative to Figure 2.

Referring now to Figure 7, the datapaths of FPU 1st, 2nd, and 3rd execution stages 56, 58, 60 will now be described. As noted above, each of execution stages 56, 58, 60 also include control and status pipelines, along which control signals and status information travel in conjunction with the operands in the corresponding datapath.

Figure 7 illustrates the construction of the datapath portion of FPU 1st execution stage 56 according to this preferred embodiment of the invention. Operands OPA and OPB are received from router 54 and stored in registers 81A, 81B, respectively. In this embodiment of the invention, FPU 1st execution stage 56 includes three datapaths; one datapath handles the exponents of floating-point operands OPA and OPB, a second datapath aligns the mantissas of operands OPA and OPB for add and subtract instructions, and a third datapath multiplies operands OPA and OPB for multiply and divide instructions. As such, exponent adders 82 in FPU 1st execution stage 56 receive exponent portions EXPA, EXPB of operands OPA, OPB, respectively, and generate the four results EXPA + EXPB - bias, used in multiplication; EXPA- EXPB + bias, used in division; and the results EXPB - EXPA and EXPA - EXPB used in floating-point adds and subtracts. Exponent selector 88 selects from among the four exponent adder results, under the control of a control signal from FPU scheduler 50, as generated for the current instruction. The output of exponent selector 88 produces an exponent value that is forwarded to FPU 2nd execution stage 58; these, and the others of, outputs from FPU 1st execution stage 56 are typically registered outputs for purposes of stability (the registers not shown in Figure 7 for clarity).

The addition datapath in FPU 1st execution stage 56 includes a conventional alignment shifter 84 that shifts the mantissas of the operands (applied thereto on lines MANTA and MANTB), as required by additive instructions such as floating-point adds and subtracts and by a shift count indicated by exponent selector 88, based upon the greater of the results EXPA - EXPB or EXPB - EXPA. The outputs of alignment shifter 84 on lines ADDA, ADDB, CIN (carry in), and a sticky bit (not shown) are applied to FPU 2nd execution stage 58. As is conventional in the art, the sticky bit is the logical OR of the bits shifted out of the end of alignment shifter 84, and is used in rounding. Other conventional floating-point add hardware, such as a mantissa comparator to compute the sign of the result in effective subtraction events or to determine the larger of two NaN operands, and the like, may also be provided in combination with alignment shifter 84.

The multiplication datapath in FPU 1st execution stage 56 includes multiplier array 86, which receives mantissas on lines MANTA, MANTB from operand registers 81A, 81B, respectively, and which provides outputs on lines MPYSUM, MPYCARRY, CIN, and a sticky bit to FPU 2nd execution stage 58. Referring now to Figure 8, multiplier array 86 is constructed, according to this embodiment of the invention, in a 72-bit by 72-bit carry-save architecture, using three-bit Booth encoding to reduce the number of partial products to thirty-six. In this embodiment of the invention, the multiplicand is associated with the binary value on lines MANTA, while the multiplier is associated with the binary value on lines MANTB. The multiplier on lines MANTB are applied to three-bit Booth encoder 68 which, in this example, generates three control signals indicating the value of the partial product (i.e., multiple of the multiplicand) to be added; in the three bit case, the possible choices are 0X, ±1X, and ±2X the value of the multiplicand presented on lines MANTA. The MSBs of the multiplicand on lines MANTA are also forwarded to sign extension circuitry 69, which generates sign extension bits in the conventional manner, to eliminate the necessity for full-width adder stages in multiplier array 86.

According to this exemplary implementation, each of the mantissa operands applied to multiplier array 86 are 72 bits in width, even though the highest precision IEEE 754 standard format requires a sixty-four bit mantissa. As will be described in further detail hereinbelow, some of these additional bits are necessary to achieve a sufficiently accurate result for division operations, considering that the digital multiplication is of finite precision. However, additional bits beyond those required for accurate division according to the preferred embodiment of the invention are often included within floating-point multipliers to provide accurate calculation of transcendental functions (e.g., trigonometric and hyperbolic function evaluation). The remaining bits of the 72-bit width are provided, in this example, as a result of the organization of the adder stages as described hereinbelow, and in effect are "free" bits of precision considering that the number of adder stages would not be reduced if the extra bits were not provided. Multiplier array 86, as noted above, includes multiple levels of carry-save adders, by way of which the partial products of the multiplicand as indicated by the Booth encoded multiplier are added into the product. According to this embodiment of the invention, five levels 70, 72, 74, 76, 78, 80 of carry-save adders are used to add the thirty-six partial products of the multiplicand, as selected by Booth encoder 68, into the sum (lines MPYSUM of Figure 5) and carry (lines MYPCARRY) constituting the product of the mantissas on lines MANTA, MANTB. First carry-save level 70 consists of nine 4-to-2 carry-save adders (CSAs). Each of the nine CSAs in level 70 receive four partial products at their inputs, and add these partial products to form two intermediate results (sum and carry bits for each bit position). As suggested by Figure 8, the CSAs in level 70 are each at least seventy-five bits wide, to accommodate up to three sign extension bits. In addition, in this exemplary embodiment, each partial product of the multiplicand is divided by two (by way of a right binary shift); the results are multiplied by two from the last adder stage (by way of a left binary shift) to account for the initial division.

The eighteen results from first carry-save level 70 are forwarded to second carry-save level 72, in the form of up to eighty-two bit binary words. Second carry-save level 72 consists of six 3-to-2 CSAs, for receiving the eighteen results and generating twelve results therefrom, of bit width up to eighty-eight bits, which are in turn applied to third carry-save level 74. Third carry-save level 74 has three 3-to-2 CSAs, which generate six results in the form of up to 100-bit words for application to fourth carry-save level 76; some of the least significant bit results from third carry-save level are not be forwarded to fourth carry-save level 78, but are instead forwarded to sticky bit circuitry 79 which generates the sticky bit used for rounding. Fourth carry-save level 76 includes two 3-to-2 CSAs that generate four result words of up to 124 bits in width, with some of the least significant bits also forwarded to sticky bit circuitry 79. The four results from fourth carry-save level 78 are applied to fifth carry-save level 78, which is a 4-to-2 CSA that produces the sum and carry result words of up to 145 bits in width. The seventy-two MSBs of the sum and carry results from fifth carry-save level 78 are stored in sum and carry registers 80s, 80c, respectively, after a left-shift by one bit position to recover the factor of two lost by the initial division. Carry bits generated by the left shift is stored in carry bit register 80cb. A sticky bit is generated by sticky bit logic circuit 79 from the LSBs of the results from carry-save levels 74, 76, 78, and is stored in sticky bit registers 80sb. The final results from multiplier array 86 are then forwarded to FPU 2$^{nd}$ execution stage 58 on lines MPYSUM, MPYCARRY, CIN as shown in Figure 5.

FPU 1st execution stage 56 also includes logic (not shown) for recognizing the exceptions of denormalized operands, and of special operands such as zero, infinity, NaN, and the like, when presented as input operands OPA, OPB. This recognition is performed at the input stage because execution stages 56, 58, 60 in FPU 31 are arranged to only operate on normalized operands, according to this embodiment of the invention. Typically, these input exceptions will be handled by FPU 1st execution stage 56 issuing a floating-point sequencer request to FPU microsequencer 47. The input operands will then be reformatted by operation of execution stages 56, 58, 60 executing a microcode sequence called from FPU microsequencer 47. Subsequent instructions in floating-point queue and schedule stages 51, 53 will be aborted until the input exception is handled.

FPU 2nd execution stage 58 includes exponent adjust circuit 94, including preferably a conventional leading bit estimator circuit to derive an exponent shift count that estimates the position of the leading bit of the result for forwarding to normalization circuit 100 in the mantissa data path of FPU 3rd execution stage 60. The exponent value may also be incremented or decremented in exponent adjust circuit 94, and applied to FPU 3rd execution stage 60. In addition, the exponent values output from exponent adjust circuit is also forwarded to over/underflow detector 98, which generates underflow and overflow flags in floating-point status word FSW in the event of an exception. The mantissas for the add and multiply cases are presented to adder 90 by way of multiplexers controlled by a control signal from the control pipeline (not shown) according to whether an add or-multiply instruction is being executed. Adder 90, which is a conventional adder of the carry-propagate (CPA) type, receives the mantissa results from FPU 1st execution stage 56, and also a selected carry-in input. The result of the addition by adder 90 is presented to normalization circuit 100 in FPU 3rd execution stage 60. The sticky bits are also forwarded to rounding circuitry 106 in FPU 3rd execution stage 60.

In FPU 3rd execution stage 60, normalization circuit 100 receives a shift count from FPU 2nd execution stage 58, and shifts the result of adder 90 by the shift count indicated, and also performs a fine shift as required. FPU 3rd execution stage 60 also includes rounding circuitry 106 that increments the normalized mantissa in order to calculate a rounded up value using one of several previously stored roundup entries, selected according to the precision mode for the instruction being executed. An appropriate rounding mask corresponding to a precision mode is also combined with the normalized mantissa (both with and without incrementing), with the appropriate value selected and applied as the mantissa result to result selector 115, under the control of a roundup signal from combinational logic that analyzes the states of the sign bit, LSB, guard bit, round bit, and sticky bit of the mantissa to determine whether and how the normalized mantissa is to be rounded.

The appropriate exponent value from FPU 2nd execution stage 58 is presented to multiplexer 115, as determined by the current operation and the values of the operands themselves. The sign bit is forwarded from the parallel floating-point status pipeline (not shown) directly to the sign bit location in result register 112.

As shown in Figure 5, FPU 3rd execution stage 60 also includes quick ROM 110, which stores certain constants, such as indefinite QNaN, zero, infinity ($\pm$), $\pi$ and common fractions of $\pi$, and the largest representable number in each available precision format, that are often used in floating-point operations either as the result of an operation or in the event of an exception. These constants are accessed by address values generated by FPU 1st execution stage 56. Result selector 115 selects from between the calculated mantissa, sign, and exponent values and the output of quick ROM 110 for storing the results in result register 117 depending upon the result of the instruction (i.e., whether or not an exception occurred). The contents of result register 117 are forwarded on writeback bus WB to FPU router 54 as discussed above relative to Figure 2. With completion of the operations of FPU 3rd execution stage 60, one pass in the performance of a floating-point instruction is complete.

According to the preferred embodiment of the invention, as described hereinabove, the multiplicand and multiplier operands are represented as seventy-two bit binary words, even though, according to the IEEE 754 floating-point standard, accuracy must only be guaranteed to one-half of the sixty-fifth bit position. Some of these additional bits are necessary to provide sufficient computational accuracy, considering the finite precision arithmetic inherent in digital computers; the remainder of the bits are made available by the particular arrangement of multiplier array 86.

As noted above in the Background of the Invention, conventional convergence division is performed by obtaining an initial estimate of the reciprocal of the divisor, and then multiplying the dividend by this initial divisor estimate to obtain an initial quotient estimate. A divisor adjustment factor is obtained by multiplying the true divisor by the reciprocal estimate. In each iteration, a new reciprocal adjustment factor is obtained by subtracting the previous divisor adjustment factor from 2, and a new divisor adjustment factor is obtained by multiplying the previous divisor adjustment factor by the new value of the reciprocal adjustment factor. The next estimate of the quotient is obtained by multiplying the previous quotient estimate by the new reciprocal adjustment factor, and the process continues until a quotient of the desired accuracy is obtained.

Accordingly, conventional convergence division requires subtraction of the divisor adjustment factor from 2 in each iteration. It has been observed, in connection with the present invention, that this subtraction requires up to three machine cycles to perform. For example, in FPU 31 of Figure 5, subtraction of an operand from 2 requires a full pass through the three execution stages 56, 58, 60, which consumes three machine cycles. Referring now to Figure 7, a method of efficiently performing convergence division according to the preferred embodiment of the invention will now be described in detail.

The following description will describe, in detail, the division of the mantissas of a dividend operand DVD by a divisor operand DVR, each of the dividend DVD and divisor DVR being floating-point operands. As is conventional in the art, and as described hereinabove relative to Figure 7, floating-point multiplication and division involve operations upon both the mantissa and exponent portions of the floating-point operands. The exponent operations are handled by exponent adders 82 of FPU 31 subtracting the exponent of divisor operand DVR from the exponent of dividend operand DVD, with the quotient exponent being stored in one of the registers of FPU register file 52 until the generation of the quotient mantissa as described relative to Figure 7. Of course, the calculation of the quotient exponent may alternatively be performed after the mantissa division.

According to the preferred embodiment of the invention, the method of Figure 7 is implemented as a microcode sequence under the control of FPU microsequencer 47. As such, the division method of Figure 7 is called by FPU scheduler 50 applying, to FPU microsequencer 47, a microcode entry address on lines μFPI corresponding to the beginning instruction of a microcode sequence having instructions corresponding to the method. Each process and decision indicated in Figure 7 will thus correspond to an instruction provided by FPU microsequencer 47 to FPU queue stage 49 and FPU scheduler 50, for execution by FPU 31. As such, the operations of accessing and scheduling the microcoded instructions for this method will be presumed for each step in the following description.

As shown in Figure 7, the method of division according to the preferred embodiment of the invention begins with process 83, in which an initial reciprocal estimate $R_0$ is obtained. Prior to process 83, dividend operand DVD and divisor operand DVR are each stored in registers within FPU 31, for example in operand registers within FPU router 54, as the original values are necessary not only for the division process, but also in effecting rounding as will be described hereinbelow. In this exemplary embodiment, initial reciprocal $R_0$ is retrieved from reciprocal portion 55a of FPU ROM 55 by router 54 applying the most significant portion of the mantissa of divisor operand DVR as an address. Divisor reciprocal portion 55a of FPU ROM 55 returns a five-bit estimate $R_0$ for the reciprocal of divisor operand DVR, which is stored by FPU router 54 into one of the registers of FPU register file 52. For purposes of this description, the location in FPU register file 52 receiving the initial reciprocal value $R_0$ will be referred to as register R. This operation is effectively equivalent to a MOV instruction, according to the x86 instruction set. For purposes of this description, an index i is initialized to 0 at this point.

Process 85 is then performed by FPU 31 to generate an initial divisor adjustment factor $D_0$. Process 85 is performed by retrieving the initial divisor reciprocal estimate $R_0$ from register R, and by applying these contents to multiplier array 86 along with the mantissa of divisor operand DVR. In this exemplary embodiment of the present invention, this multiplication product is rounded down, its exponent is forced to $0x3FFE_h$ (the subscript h indicating hexadecimal notation), and its sign bit is forced positive. The product of process 85 is the initial divisor adjustment factor $D_0$, and is stored in a register in FPU register file 52 which will be referred to in this description as register D.

FPU 31 then completes the initialization, in process 87, by generating an initial quotient estimate $Q_0$. In FPU 31 according to this embodiment of the invention, process 87 is performed by retrieving the contents of register R and also retrieving dividend operand DVD, and applying their mantissas to multiplier array 86 to execute a floating-point multiply instruction thereupon. In this exemplary embodiment, the multiplication product is rounded up, the exponent of the result is forced to $0x3FFE_h$ and the sign bit of the result is forced positive. This multiplication effectively generates the initial quotient estimate $Q_0$ by multiplying dividend operand DVD by an initial estimate $R_0$ of the reciprocal of divisor operand DVD. The product of process 87 is stored in another register in FPU register file 52, which will be referred to in this description as register Q.

The iterative portion of the division method according to this embodiment of the invention now begins with process 89, in which FPU 31 generates a reciprocal adjustment factor $R_1$ based upon the initial divisor adjustment factor $D_0$. Referring back to Figure 3, process 89 according to the preferred embodiment of the invention is performed by simply retrieving the contents of register D from FPU register file 52, applying the mantissa portion of these contents to inverting circuitry 61, and storing the result, which is a bit-by-bit logical complement of the mantissa of initial divisor adjustment factor $D_0$, into register R of FPU register file 52, replacing the initial reciprocal estimate $R_0$ previously stored therein. As described above, according to conventional convergence division, the generating of a reciprocal adjustment factor would be performed by subtracting the initial divisor adjustment factor $D_0$ from 2; however, this subtraction would have required a full pass through execution stages 56, 58, 60 of FPU 31, which consumes three machine cycles. In contrast, the generating and storing of the logical complement of initial divisor adjustment factor $D_0$, via inverting circuitry 61, requires only a single machine cycle and may be performed without use of execution stages 56, 58, 60.

Of course, process 89 will insert additional computational error into the division operation according to this embodiment of the invention. As will be described in further detail hereinbelow, however, this additional error may be readily accounted for by the use of an additional bit, in the multiplier and internal registers, beyond those bits which are necessary for convergence division according to conventional methods. In the preferred embodiment of the present invention, however, multiplier array 86 is already capable of handling 72-bit operands for purposes of transcendental function evaluation, and also because of the construction of multiplier array 86 itself, and therefore sufficient bits are already present to handle the additional error resulting from process 89.

Process 91 is then performed by FPU 31 to adjust the divisor adjustment factor $D_1$, relative to its initial estimate $D_0$. According to this preferred embodiment of the invention, process 91 is performed by again retrieving the contents of registers D and R from FPU register file 52. The contents of register R correspond, at this time, to the results of process 89 in which the previous divisor adjustment factor $D_i$ was logically complemented. These contents corresponding, in this first pass, to initial divisor adjustment factor $D_0$ and the first reciprocal adjustment factor $R_1$ determined in process 89, are then multiplied by multiplier array 86; in this exemplary embodiment, the result of the multiplication is rounded up. The product is then stored in register D, replacing the initial divisor adjustment factor $D_0$.

In process 93, FPU 31 then generates a first (in this first pass) adjusted quotient estimate $Q_1$ from the initial

quotient estimate $Q_0$ by retrieving and multiplying the contents of register R (the most recent value of reciprocal adjustment factor $R_1$) by the contents of register Q (the initial quotient estimate $Q_0$), again via multiplier array 86. The result of the multiplication of process 93 is rounded down, and stored in register Q of FPU register file 52, replacing the initial quotient estimate $Q_0$ previously stored thereat.

Decision 96 determines if the accuracy of the estimate for quotient $Q_0$ is adequate, typically merely by comparing the index value i+1 against a known limit. As noted hereinabove, the number of iterations required for division to the desired accuracy, such as that required by the IEEE 754 floating-point standard, may be readily calculated from the number of bits with which each operand is expressed, in combination with the accuracy of the initial estimate of reciprocal $R_0$. In the case of 72-bit operands and five-bit initial estimate accuracy, four passes through the method are sufficient (i.e., decision 96 is NO until i+1 reaches 5). In general, one may determine the number of iterations required by ensuring that the number of bits with which the quotient is to be expressed (e.g., 64 bits), plus any additional bits required for accuracy in rounding as will be described hereinbelow, is less than the number of bits of accuracy of the initial reciprocal estimate $R_0$ (e.g., five bits) times $2^n$, where n is the number of passes through the iterative method (e.g., four); in this example, 64 (plus six additional bits, as will be described hereinbelow) is indeed less than $5 \times 2^4$. If additional iterations remain to be performed (decision 96 is YES), the index i is incremented in process 95, and processes 89, 91, 93 are repeated. In each additional iteration, processes 89, 91, 93 retrieve the contents of registers D, R, Q of FPU register file 52, and replace these contents with updated values of divisor adjustment factor $D_{i+1}$, reciprocal adjustment factor $R_{i+1}$, and quotient estimate $Q_{i+1}$. Specifically, process 89, in which the reciprocal adjustment factor $R_{i+1}$ is adjusted from its prior value $R_i$, is performed in each pass by retrieving the contents of register D and applying these contents to inverting circuitry 61, which performs bit-by-bit logical complementing of the mantissa of the current divisor adjustment factor $D_i$ to generate an updated reciprocal adjustment value $R_{i+1}$, storing these results in register R of FPU register file 52. The logical complementing of process 89 according to this embodiment of the invention requires, at most, one machine cycle, saving two machine cycles in each iteration by eliminating the necessity of subtracting the divisor adjustment factor $D_i$ from 2, as is required in conventional convergence division. In the example of FPU 31, where division of 72-bit mantissas is performed using a five-bit initial estimate, requiring four iterations, eight cycles can be saved according to the preferred embodiment of the invention. Considering that conventional convergence division requires thirty-nine machine cycles, substantial performance improvement may be obtained from the implementation of the present invention.

As noted above, logical complementing process 89 introduces slightly more error into the division operation than is present in conventional convergence division, and this additional error must be considered in selecting the number of bits with which each operand mantissa is represented. Error analysis of the division process according to the preferred embodiment of the invention, in which finite precision arithmetic is performed, will indicate the number of bits required for suitable accuracy. As is known in the art, the IEEE 754 floating-point standard requires all divisions to be performed with an accuracy of ±½ unit in the least significant bit position (ulp). As noted above, process 93 adjusts each current quotient estimate $Q_i$ into an adjusted new value $Q_{i+1}$ by the following calculation:

$$Q_{i+1} = Q_i \times R_{i+1}$$

which, according to the conventional convergence division method, equates to:

$$Q_{i+1} = Q_i \times (2 - D_i)$$

Error analysis of the conventional convergence division method, considering the finite precision of FPU 31, begins by considering that the initial quotient estimate $Q_0$ is below the true quotient, because the MSB estimate of the initial divisor reciprocal $R_0$ is less than or equal to the true reciprocal. In each iteration, as described above, estimate $Q_i$ and reciprocal adjustment factor $R_i$ are rounded down and divisor adjustment factor $D_i$ is rounded up, to maintain the direction of convergence of estimate $Q_i$ from below the true quotient for fast IEEE rounding of the final unrounded quotient. Accordingly, in each iteration, the values of $R_i$, $D_i$, and $Q_i$ can potentially suffer error up to 1 ulp, where the last bit position has a binary weight of $2^{-p}$, p being the number of bits in the operand. Accordingly, the next iterated values of the estimate and factors $R_{i+1}$, $D_{i+1}$, $Q_{i+1}$ according to the conventional convergence division method, including the finite precision error, are as follows:

$$R_{i+1} = 2 - D_i$$

$$D_{i+1} = D_i \times R_{i+1} + 2^{-p}$$

$$Q_{i+1} = Q_i \times R_{i+1} - 2^{-p}$$

As described above, process 89 according to the preferred embodiment of the invention derives the next iterated reciprocal adjustment factor value $R_{i+1}$ by merely taking the logical complement (i.e., one's complement) of the current divisor adjustment factor value $D_i$. As is known in the art, the difference between the two's complement (i.e., subtraction from 2) and one's complement values of a binary number is the addition of 1 ulp in the two's complement case. Accordingly, the increased error in the calculation of the next iterated reciprocal adjustment factor value $R_{i+1}$ presented by process 89 is an additional 1 ulp, or an additional $2^{-p}$, or:

$$(2-D_i)-\overline{D_i}=2^{-p}$$

As such, the representations of the next iterated values of the estimates and factors $R_{i+1}$, $D_{i+1}$, $Q_{i+1}$ according to the preferred embodiment of the invention shown in Figure 7, including the finite precision error, are as follows:

$$R_{i+1} = \overline{D_i} = 2 - D_i - 2^{-p}$$

$$D_{i+1} = D_i \times R_{i+1} + 2^{-p}$$

$$Q_{i+1} = Q_i \times R_{i+1} - 2^{-p}$$

Worst case error analysis may be performed using these representations of the iterated values. In the above-described example for microprocessor 5 and FPU 31, capable of performing division of IEEE standard double-extended precision operands (in which the mantissas are sixty-four bits wide), the maximum acceptable error is $2^{-65}$. It can be readily found that, with an initial accuracy of the estimated divisor reciprocal $R_0$ of five bits, and where four convergence iterations of the method according to the preferred embodiment of the invention described hereinabove are performed, one can readily determine that 69 internal bits (i.e., five bits beyond the 64 bit representations) are necessary to satisfy the IEEE standard, when the logical complementing of process 89 is used to determine the next iterated reciprocal adjustment factor $R_{i+1}$. As described hereinabove, multiplier array 86 already operates upon 72-bit operands to provide sufficient accuracy for transcendental function evaluation, and as such is capable of performing the method of Figure 7 to a satisfactory level of accuracy for IEEE standard double-extended precision floating-point numbers. The method according to the preferred embodiment of the present invention may thus be readily implemented into microprocessor 5, without requiring additional bits of operand representation in FPU 31.

Referring back to Figure 7, upon the desired accuracy being obtained (decision 96 returns a YES), the most recent quotient estimate $Q_{i+1}$ becomes the quotient result $Q_{last}$ of the division. Process 97 according to the preferred embodiment of the invention is next performed by FPU 31 to generate properly rounded quotient $Q_{out}$, as will now be described.

As described in the foregoing error analysis, each quotient estimate $Q_i$ is less than the true quotient. In microprocessor 5 as described above, where at least five extra bits are provided in FPU 31 to perform the necessary operations to the desired accuracy, and considering that four iterations of convergence division according to the preferred embodiment of the invention are performed from an initial reciprocal estimate of an accuracy to five bits, the final quotient estimate $Q_{last}$ (i.e., $Q_4$) is less than the exact quotient by less than $\frac{1}{4}$ ulp, where the last bit position is the sixty-fourth bit position, counting the leading bit. This relationship is useful in performing an efficient rounding of the iterated estimated quotient $Q_{last}$ to a quotient result $Q_{out}$ in process 97, as will now be described.

A value $Q_r$ may be derived by truncating the last estimated quotient $Q_{last}$ to its final bit width plus one bit, and by adding a 1 into the least significant place. For the case of 64-bit mantissas, $Q_r$ would be derived by truncating $Q_{last}$ to 65 bits and by then adding the quantity $2^{-64}$ (i.e., a 1 in the $65^{th}$ bit position) thereto. Considering that the final quotient estimate $Q_{last}$ is within $\frac{1}{4}$ ulp ($64^{th}$ bit position) below the true quotient, the following inequality is always true:

$$\left|\frac{DVD}{DVR} - Q_r\right| < 2^{-64}$$

and accordingly:

$$|DVD - DVR \times Q_r| < 2^{-63}$$

This inequality enables the generation of the sticky bit S, as used in rounding, without performing a full precision comparison. Instead, comparison of the LSB ($64^{th}$ bit) of dividend DVD, the LSB of $Q_r$, and the logical OR of the lower order bits (e.g., bits 65 through 129) of $Q_r$ are sufficient to determine the status (i.e., negative, positive, or zero) of the remainder RM defined as:

$$RM = DVD - (Q_{last} \times DVR)$$

This status may be determined from the following table:

| $DVD_{64}$ | $(Q_r)_{64}$ | OR | RM |
|---|---|---|---|
| 0 | 0 | 0 | 0 |
| 0 | 0 | 1 | NEG |
| 0 | 1 | 1 | POS |
| 1 | 0 | 1 | POS |
| 1 | 1 | 0 | 0 |
| 1 | 1 | 1 | NEG |

The status of RM from this table can then be used to properly select the output quotient $Q_{out}$ and the value of the sticky bit S as follows:

| RM | $Q_{out}$ | S |
|-----|-----------|---|
| NEG | $\lfloor Q_{last} \rfloor$ | 1 |
| 0 | $Q_r$ | 0 |
| POS | $Q_r$ | 1 |

where $\lfloor Q_{last} \rfloor$ denotes the value $Q_{last}$ truncated to one bit position past the maximum bit width, such that the LSB serves as the round bit R in conventional rounding. In this example, where the mantissa operand is 64 bits in width, $\lfloor Q_{last} \rfloor$ indicates truncation of the value $Q_{last}$ to 65 bits.

Referring now to Figure 8, process 97 according to this embodiment of the invention will now be described, beginning with process 120 in which FPU 31 retrieves the contents of register Q of FPU register file 52, which contains the final quotient estimate $Q_{last}$ from process 93. This final quotient estimate $Q_{last}$ is added with a constant value GBIT by FPU 31, in process 120. The constant GBIT may be retrieved from FPU ROM 55, and corresponds in this example to a 1 in the 65$^{th}$ bit position (i.e., $2^{-64}$). The result of this addition (corresponding to value $Q_r$ described above) is stored in register QR of register file 52; register QR may be a different register from those previously used, or may reuse one of registers D, R if desired. In process 122, FPU 31 retrieves the contents of register QR and multiplies the value $Q_r$ therefrom with the original divisor operand DVR; the results of this multiplication are stored in register DQR (which also may reuse one of the previously used registers in FPU register file 52). Process 124 is then performed by FPU 31 to determine a value RM by interrogating the LSB (bit 64) of the contents of register Q corresponding to the final quotient estimate $Q_{last}$, the LSB (bit 64) of the contents of register DQR corresponding to the product of the value $Q_r$ with divisor DVR, and the logical OR of the lower order bits (bits 65 through 129) of the contents of register DQR. These bits are applied to logic, such as in sticky bit logic circuit 79 (Figure 6), which performs the logical combination indicated in the above truth table, generating a status code NEG, 0, or POS for the remainder RM.

In decision 125, FPU 31 tests the status of remainder RM. If RM is NEG, FPU 31 forwards, as the quotient result, the contents of register Q truncated to 65 bits, where the 65$^{th}$ bit serves as the round bit R; sticky bit S is set to 1 in this case. If RM is 0 as a result of process 124 and decision 125, FPU 31 forwards the contents of register QR as the quotient result, with sticky bit S clear. If RM is POS, FPU 31 also forwards the contents of register QR as the quotient result, with sticky bit S set to 1. Based upon these results, rounding circuitry 106 in 3$^{rd}$ execution stage 60 will be able to generate the proper quotient result.

Upon completion of the division operation according to the method described herein, the rounded quotient result $Q_{out}$ is forwarded to FPU router 54 for storage according to the instruction. For example, the quotient may be forwarded to integer register file 39 on bus STORE_DATA, following which the quotient may be stored in memory within microprocessor 5 or in main memory subsystem 305. Alternatively, the rounded quotient result $Q_{out}$ may be retained within FPU 31, in one of the registers of FPU register file 52, for use in a subsequent floating-point instruction. The eventual storing of the rounded quotient result $Q_{out}$ is illustrated in Figure 7 by process 99. The microcode sequence effecting the division according to the preferred embodiment of the invention is then complete.

According to the preferred embodiment of the present invention, therefore, significant performance improvement in the division of binary numbers, particularly in the division of floating-point operands by a microprocessor, may be obtained. These advantages may be relatively easily implemented into microprocessor hardware, for example by modifying microcode division routines and by adding simple inverting circuitry as described hereinabove. The present invention obtains this improved performance without, in many cases, involving additional error in the final result, or the necessity to provide additional computational bits, as the additional bits required to provide full accuracy may already be present.

It is contemplated that the present invention may also be applied to operations other than convergence division, in which subtraction of a binary operand from 2 (i.e., the two's complement determination) may be eliminated in favor of a simple bit-by-bit logical complement operation. Examples of operations so contemplated include the evaluation of transcendental functions and other complex floating-point calculations of an iterative nature.

While the present invention has been described according to its preferred embodiments, it is of course contemplated that modifications of, and alternatives to, these embodiments, such modifications and alternatives obtaining the advantages and benefits of this invention, will be apparent to those of ordinary skill in the art having reference to this specification and its drawings.

## Claims

1. A method of operating a microprocessor to perform division of a binary dividend with a binary divisor, comprising the steps of:

   estimating an initial reciprocal of the binary divisor;
   applying the initial reciprocal and the binary dividend to a multiplier circuit and operating the multiplier circuit to multiply the initial reciprocal and the binary dividend to produce a quotient estimate;

applying the initial reciprocal and the binary divisor to the multiplier circuit and operating the multiplier circuit to multiply the initial reciprocal and the binary dividend to produce a divisor adjustment factor;

generating a reciprocal adjustment factor by logically complementing the divisor adjustment factor with inverting circuitry;

adjusting the divisor adjustment factor by applying the reciprocal adjustment factor and a current value of the divisor adjustment factor to the multiplier circuit and operating the multiplier circuit to multiply the reciprocal adjustment factor and the current value of the divisor adjustment factor;

adjusting the quotient estimate by applying the reciprocal adjustment factor and a current value of the quotient estimate to the multiplier circuit and operating the multiplier circuit to multiply the reciprocal adjustment factor and the current value of the quotient estimate;

repeating the generating and adjusting steps; and

following the repeat of said generating and adjusting steps, storing the quotient estimate in a memory.

2. The method of Claim 1, further comprising:

after the step of applying the initial reciprocal and the binary dividend to the multiplier circuit and operating the multiplier circuit, storing the quotient estimate in a first register;

after the step of applying the initial reciprocal and the binary divisor to the multiplier circuit and operating the multiplier circuit, storing the divisor adjustment factor in a second register; and

after the step of generating a reciprocal adjustment factor, storing the reciprocal adjustment factor in a third register.

3. The method of Claim 2, further comprising:

after the estimating step, storing the initial reciprocal in the third register;

and wherein the step of generating a reciprocal adjustment factor comprises:

retrieving the contents of the second register;

applying the retrieved contents of the second register to the inverting circuitry; and

storing the output of the inverting circuitry in the third register.

4. The method of Claim 3, wherein the step of adjusting the divisor adjustment factor comprises:

retrieving the contents of the second register and the contents of the third register;

applying the retrieved contents of the second and third registers to the multiplier circuit and operating the multiplier circuit; and

storing the output of the multiplier circuit in the second register.

5. The method of Claim 3 or Claim 4, wherein the step of adjusting the quotient estimate comprises:

retrieving the contents of the first register and the contents of the third register;

applying the retrieved contents of the first and second registers to the multiplier circuit and operating the multiplier circuit; and

storing the output of the multiplier circuit in the first register.

6. The method of any preceding claim, further comprising providing the multiplier circuit with a multiplicand input and a multiplier input, each of the multiplicand and multiplier inputs having bit widths greater than the number of significant bits in the initial reciprocal and the binary dividend.

7. The method of any preceding, wherein the estimating step comprises:

applying a most significant portion of the binary divisor to a look-up circuit; and

after the applying step, operating the look-up circuit to provide an output corresponding to a reciprocal binary value of the portion of the binary divisor.

8. The method of Claim 7, wherein the step of generating the look-up circuit operating a look-up circuit comprising a read-only memory.

9. The method of Claim 7 or Claim 8, wherein the step of applying the most significant portion of the binary divisor comprises applying m bits;

repeating the generating and adjusting steps n times; and

representing the quotient estimate stored in the storing step by a number of bits that is less than $m$ times $2^n$.

10. The method of Claim 9, further comprising providing the multiplier circuit with a multiplicand input and a multiplier input, each of the multiplicand and multiplier inputs having a bit width of k bits that greater than the number of significant bits in the initial reciprocal and the binary dividend, where k is less than $m$ times $2^n$.

11. The method of any preceding claim, wherein the step of generating a reciprocal adjustment factor is performed in a single machine cycle.

12. The method of any preceding claim, further comprising, prior to the estimating step:

applying a microcode entry address to a microsequencer; and

wherein the steps of estimating, applying, generating, adjusting, and repeating are controlled by control signals presented by the microsequencer.

13. The method of any preceding claim, further comprising providing a binary dividend and binary divisor corresponding to mantissas of binary floating-point dividend and divisor operands, respectively; and further comprising:

subtracting an exponent portion of the binary floating-point divisor operand from an exponent portion of the binary floating-point dividend operand.

14. The method of any preceding claim, further comprising:

after the step of repeating the generating and adjusting steps, truncating the quotient estimate to a selected number of bits; adding a round bit to the truncated quotient estimate; after the adding step, applying the truncated quotient estimate and the binary divisor to the multiplier circuit and operating the multiplier circuit to produce a modified quotient estimate;

generating a remainder status responsive to the state of a least significant bit of the quotient estimate, the state of a least significant bit of the modified quotient estimate, and to the logical combination of a plurality of bits below the least significant bit of the modified quotient estimate;

responsive to the remainder status being negative, presenting the quotient estimate as an output quotient operand and setting a sticky bit to 1;

responsive to the remainder status being zero, presenting the modified quotient estimate as the output quotient operand and setting the sticky bit to 0; and

responsive to the remainder status being positive, presenting the modified quotient estimate as the output quotient operand and setting the sticky bit to 1.

15. A microprocessor implemented into an integrated circuit, comprising:

a memory for storing digital data words representing floating-point operands having mantissa and exponent portions; and

arithmetic circuitry, controllable according to program instructions, for retrieving a floating-point dividend operand and a floating-point divisor operand from the memory and for generating a floating-point quotient operand corresponding to the division of the dividend operand by the divisor operand, comprising:

a register file, for storing floating-point operands;

inverting circuitry, for receiving a selected operand from the register file and for generating a logical complement of at least a portion of the selected operand for storage in the register file;

a divisor reciprocal memory, for receiving a most significant portion of the mantissa of a divisor operand as an address, and for outputting a reciprocal value responsive thereto; and

an arithmetic execution stage, for performing arithmetic operations upon floating-point operands retrieved from the register file and applied thereto, and comprising a multiplier circuit for multiplying mantissas of floating-point operands;

wherein the arithmetic circuitry is operable to execute, in response to a division instruction, the steps of:

applying a most significant mantissa portion of the divisor operand to the divisor reciprocal memory to retrieve an initial reciprocal;

multiplying the initial reciprocal with the dividend operand to produce a quotient estimate;

multiplying the initial reciprocal with the divisor operand to produce a divisor adjustment factor;

generating a reciprocal adjustment factor by applying the divisor adjustment factor to the inverting circuitry;

adjusting the divisor adjustment factor by multiplying the reciprocal adjustment factor and a current value of the divisor adjustment factor;

adjusting the quotient estimate by multiplying the reciprocal adjustment factor and a current value of the quotient estimate; and

repeating the generating and adjusting steps.

16. The microprocessor of Claim 15, wherein the multiplier circuit comprises a multiplier array having a multiplicand input and a multiplier input, each of the multiplicand and multiplier inputs for receiving operands having a bit width larger than the number of bits of the mantissa portion of the floating-point operands.

17. The microprocessor of Claim 16, wherein the arithmetic unit further comprises:

a scheduler, for receiving instruction codes and for controlling the operation of the arithmetic unit responsive thereto; and

a microsequencer, coupled to the scheduler, for controlling the operation of the arithmetic unit according to a sequence of microinstructions initiated by the scheduler in response to a division instruction code.

18. The microprocessor of any of claims 15 to 17, wherein the arithmetic execution stage further comprises:

an exponent adder, for adding and subtracting exponent portions of floating-point operands.

19. The microprocessor of any of claims 15 to 17, further comprising:

an integer execution unit, coupled to the memory, for performing arithmetic and logical operations.

*FIG. 1*

FIG. 2

FIG. 4

*FIG. 3*

FIG. 5

FIG. 6

RETRIEVE INIT. RCP. $R_0$, FROM ROM 55a AND STORE IN REGISTER R —83

(i=0)

MPY $R_0$ WITH DIVISOR; STORE $D_0$ IN REGISTER D —85

MPY $R_0$ WITH DIVIDEND OPERAND; STORE $Q_0$ IN REGISTER Q —87

RETRIEVE CONTENTS <D>; APPLY TO INVERTERS 61 AND STORE IN REGISTER R —89

MPY CONTENTS <D>, <R> AND STORE IN REGISTER D —91

INCREMENT i —95

MPY CONTENTS <R>, <Q> AND STORE IN REGISTER Q —93

96
i+1= LIM? — NO

YES

ROUND $Q_{LAST}$ TO $Q_{OUT}$ —97

STORE $Q_{OUT}$ IN MEMORY RESOURCE —99

FIG. 7

97

RETRIEVE CONTENTS <Q> AND ADD WITH GBIT; TRUNCATE AND STORE IN REG. QR —120

RETRIEVE CONTENTS <QR> MPY WITH DVR; IN REGISTER DQR —122

DERIVE RM FROM LSB<Q> LSB<DQR> OR SUB-LSBs <DQR> —124

125
RM<0 — TEST RM — RM>0

126a    126b   RM=0    126c

$Q_{OUT}=<Q>$ S=1    $Q_{OUT}=<QR>$ S=0    $Q_{OUT}=<QR>$ S=1

CONTINUE

FIG. 8

**European Patent Office**

**EUROPEAN SEARCH REPORT**

Application Number

EP 97 11 8062

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 3 508 038 A (GOLDSCHMIDT ROBERT E ET AL) | 1-13, 15-19 | G06F7/52 |
| Y | * column 12, line 62 - column 15, line 42; claims 4,6; figure 2 * | 14 | |
| Y | US 4 594 680 A (SCHOMBURG JOHN R  ET AL) <br> * column 4, line 40 - line 68 * <br> * column 8, line 48 - column 9, line 27 * | 14 | |
| A | "ADAPTATION OF FLOATING POINT DIVISION ALGORITHM TO FIXED POINT ARITHMETIC" <br> IBM TECHNICAL DISCLOSURE BULLETIN, <br> vol. 36, no. 6B, 1 June 1993, <br> pages 529-533, XP000377474 <br> * page 532, paragraph 1 * | 1,6,9, 10,15 | |
| A | EP 0 424 086 A (MATSUSHITA ELECTRIC IND CO LTD) <br> * figure 4 * | 14 | |
| A | LU P Y ET AL: "A VLSI MODULE FOR IEEE FLOATING-POINT MULTIPLICATION/DIVISION/SQUARE ROOT" PROCEEDINGS OF THE INTERNATIONAL CONFERENCE ON COMPUTER DESIGN: VL IN COMPUTERS AND PROCESSORS, CAMBRIDGE, OCT. 2 - 4, 1989, <br> no. -, 2 October 1989, INSTITUTE OF ELECTRICAL AND ELECTRONICS ENGINEERS, <br> pages 366-368, XP000090503 <br> * page 367, left-hand column * | 14 | TECHNICAL FIELDS SEARCHED (Int.Cl.6) <br><br> G06F |

The present search report has been drawn up for all claims

| Place of search | Date of completion of the search | Examiner |
|---|---|---|
| THE HAGUE | 14 January 1998 | Verhoof, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)